# EUROPÄISCHE PATENTSCHRIFT

(11) **EP 3 851 929 B1**
(45) Veröffentlichungstag und Bekanntmachung des Hinweises auf die Patenterteilung: **20.07.2022**
(21) Anmeldenummer: 21150474.1
(22) Anmeldetag: 07.01.2021
(51) Int. Cl.: G05D 1/02

(54) **VERFAHREN ZUM BETRIEB EINES SYSTEMS MIT MINDESTENS ZWEI SICH SELBSTTÄTIG FORTBEWEGENDEN BODENBEARBEITUNGSGERÄTEN SOWIE SYSTEM ZUR DURCHFÜHRUNG EINES SOLCHEN VERFAHRENS**
METHOD FOR OPERATING A SYSTEM WITH AT LEAST TWO AUTOMATICALLY MOVING EARTH WORKING DEVICES AND SYSTEM FOR CARRYING OUT SUCH A METHOD
PROCÉDÉ DE FONCTIONNEMENT D'UN SYSTÈME COMPRENANT AU MOINS DEUX APPAREILS DE TRAITEMENT DU SOL MOBILES AUTOMATIQUES AINSI QUE SYSTÈME DE MISE EN OEUVRE D'UN TEL PROCÉDÉ

(30) Priorität: 14.01.2020 DE 102020100666
(43) Veröffentlichungstag der Anmeldung: 21.07.2021
(73) Patentinhaber: Vorwerk & Co. Interholding GmbH, 42275 Wuppertal (DE)
(72) Erfinder: Mosebach, Andrej, 59425 Unna (DE); Papenheim, Marc, 42349 Wuppertal (DE); Hayn, Henning, 40723 Hilden (DE)
(74) Vertreter: Müller, Enno

(56) Entgegenhaltungen:
- EP-A2- 3 329 825
- WO-A1-2020/004824
- US-A1- 2015 148 951

## Beschreibung

### Gebiet der Technik

Die Erfindung betrifft ein Verfahren zum Betrieb eines Systems mit zumindest zwei sich selbsttätig fortbewegenden Bodenbearbeitungsgeräten, wobei zumindest eines der Bodenbearbeitungsgeräte Umgebungsmerkmale einer Umgebung detektiert und anhand der detektierten Umgebungsmerkmale eine Umgebungskarte erstellt, wobei die Umgebungskarte in Teilbereiche aufgeteilt wird und die Teilbereiche den Bodenbearbeitungsgeräten so zugewiesen werden, dass jeder Teilbereich nur durch eines der Bodenbearbeitungsgeräte bearbeitet wird.

Des Weiteren betrifft die Erfindung ein System mit mindestens zwei Bodenbearbeitungsgeräten, wobei das System zur Durchführung eines solchen Verfahrens ausgebildet ist.

### Stand der Technik

Systeme mit mehreren sich selbsttätig fortbewegenden Bodenbearbeitungsgeräten sind im Stand der Technik bekannt. Die Bodenbearbeitungsgeräte, beispielsweise Reinigungsgeräte wie Saugroboter oder Wischroboter, können eine Umgebung gemeinsam bearbeiten, indem den Bodenbearbeitungsgeräten Teilbereiche der Umgebung zugewiesen werden. Ein erstes Bodenbearbeitungsgerät bearbeitet beispielsweise einen ersten Teilbereich der Umgebung, während ein zweites Bodenbearbeitungsgerät einen zweiten Teilbereich bearbeitet.

Die Bodenbearbeitungsgeräte können beispielsweise in ein mobiles Kommunikationssystem integriert sein, beispielsweise ein sogenanntes Smart Home Netzwerk, wobei die Bodenbearbeitungsgeräte entweder direkt miteinander oder indirekt über einen gemeinsamen Access Point, einen Server, eine Cloud oder ähnliches miteinander kommunizieren können. Es ist auch bekannt, dass Bodenbearbeitungsaufgaben im Voraus durch einen Aufgabenplan festgelegt werden, wobei die Bodenbearbeitungsaufgaben so unter den Bodenbearbeitungsgeräten aufgeteilt werden können, dass eine möglichst zeitsparende Ausführung der Tätigkeiten erfolgt.

Die Druckschrift WO 2018/202337 A1 offenbart beispielsweise ein Verfahren, bei welchem Positionsinformationen von mindestens zwei Reinigungsgeräten sowie Verschmutzungsinformationen der Umgebung erfasst werden, und wobei zumindest eines der Reinigungsgeräte zum Zwecke einer Reinigung gesteuert wird. Es ist des Weiteren offenbart, dass eine zentral in einem Haushalt installierte Home Appliance Steuerung einen Steuerbefehl basierend auf einem geplanten Bewegungsmuster ausgibt. Durch die Planung einer Fortbewegungsroute nach der Art eines sogenannten "Travelling Salesman"-Problems kann in Bezug auf eine aufzuwendende Energie und/oder eine benötigte Zeit eines Reinigungsgerätes eine optimierte Behandlung eines zu reinigenden Bereichs in dem Haushalt durch die Summe der eingesetzten Reinigungsgeräte erreicht werden.

Obwohl sich Systeme und Verfahren der vorgenannten Art im Stand der Technik bewährt haben, ist es für einen Nutzer dennoch unübersichtlich, wann welches Reinigungsgerät eine Reinigungstätigkeit ausführt und beendet. Insofern können für einen Nutzer unkomfortable Situationen entstehen, in welchen dieser durch ein Reinigungsgerät gestört wird oder auf die Beendigung einer Reinigungstätigkeit warten muss.

Aus den Dokumenten WO 2020/004824 A1, US 2015/0148951 A1 und EP 3 329 825 A2 sind Systeme mit mehreren Robotern bekannt, welche gleichzeitig unterschiedliche Umgebungsteilbereiche einer Umgebung bearbeiten können. Jeder Roboter führt dabei eine Reinigungstätigkeit in einem bestimmten Umgebungsteilbereich aus.

### Zusammenfassung der Erfindung

Ausgehend von dem vorgenannten Stand der Technik ist es daher Aufgabe der Erfindung, ein vorgenanntes System bzw. Verfahren so weiter zu entwickeln, dass der Nutzer möglichst wenig von den Bodenbearbeitungstätigkeiten der Bodenbearbeitungsgeräte beeinträchtigt wird. Ebenso soll die Bodenbearbeitung mit optimalem Ergebnis, sowie energie- und zeitsparend durchgeführt werden können.

Zur Lösung der vorgenannten Aufgabe wird zunächst vorgeschlagen, dass eine während der Detektion der Umgebungsmerkmale verfolgte Fortbewegungsroute des Bodenbearbeitungsgerätes sowie eine bei der Fortbewegung entlang der Fortbewegungsroute verstrichene Fortbewegungszeitspanne detektiert und mit der Umgebungskarte abgespeichert werden, wobei mehrere Teilbereiche zu Teilbereichsgruppen zusammengefasst werden, und wobei die Zuweisung der Teilbereiche zu den Bodenbearbeitungsgeräten unter Berücksichtigung der gespeicherten Fortbewegungsroute und Fortbewegungszeitspanne so erfolgt, dass eine Bodenbearbeitung einer ersten Teilbereichsgruppe durch ein erstes Bodenbearbeitungsgerät im Wesentlichen gleichzeitig mit einer Bodenbearbeitung einer zweiten Teilbereichsgruppe durch ein zweites Bodenbearbeitungsgerät beendet wird, wobei die während der Detektion der Umgebungsmerkmale der Umgebung verstrichene Fortbewegungszeitspanne auf eine von einem bestimmten Bodenbearbeitungsgerät benötigte individuelle Zeitspanne zur Bearbeitung des jeweiligen Teilbereiches umgerechnet wird, indem eine Fortbewegungsgeschwindigkeit des die Umgebungsmerkmale detektierenden Bodenbearbeitungsgerätes mit einer charakteristischen Fortbewegungsgeschwindigkeit eines einzuplanenden Bodenbearbeitungsgerätes verglichen wird, und wobei jedem Teilbereich der Umgebung eine Information derart zugewiesen wird, ob das die Umgebungsmerkmale detektierende Bodenbearbeitungsgerät durch den Teilbereich gefahren ist und wie lange sich das Bodenbearbeitungsgerät dabei in dem Teilbereich aufgehalten hat.

Erfindungsgemäß erfolgt eine Unterteilung und Zuordnung der in der Umgebungskarte verzeichneten Teilbereiche nun so, dass zu Gruppen zusammengefasste Teilbereiche in Bezug auf deren Bodenbearbeitungen möglichst gleichzeitig fertiggestellt werden. Die Vielzahl von Teilbereichen wird zu diesem Zweck zu mehreren Teilbereichsgruppen zusammengefasst, welche nach definierten Regeln in Bezug auf deren Position, Form und Größe variiert werden können. Dies geschieht mit der Maßgabe, dass die in der Umgebung angelegten Teilbereichsgruppen möglichst zeitgleich fertig bearbeitet sind und ein in
**(weiter auf Seite 4 oben, der ursprünglich eingereichten Unterlagen)** der Umgebung anwesender Nutzer nicht oder so kurz wie möglich auf noch einzelne arbeitende Bodenbearbeitungsgeräte warten muss, bis auch diese ihre Bodenbearbeitungstätigkeit fertiggestellt haben. Die Angabe "im Wesentlichen gleichzeitig" oder "nahezu gleichzeitig" bedeutet hier, dass die Bodenbearbeitungen der Teilbereichsgruppen durch die Bodenbearbeitungsgeräte bis auf eine solche Zeitdifferenz gleichzeitig beendet werden, die ein zugeordnetes Bodenbearbeitungsgerät zur Bearbeitung eines oder weniger Teilbereiche benötigt. Falls die Umgebungskarte in eine Vielzahl von Teilbereichen aufgeteilt ist, welche den Bodenbearbeitungsgeräten nacheinander zur Bearbeitung zugeteilt werden, kann die Zeitdifferenz zwischen dem Ende der Bearbeitung der ersten Teilbereichsgruppe durch das erste Bodenbearbeitungsgerät und dem Ende der Bearbeitung der zweiten Teilbereichsgruppe durch das zweite Bodenbearbeitungsgerät so groß sein wie die Zeitspanne, die eines der Bodenbearbeitungsgeräte benötigt, um bis zu zehn Teilbereiche der ihm zugeordneten Teilbereichsgruppe zu bearbeiten. Vorzugsweise entspricht die Zeitdifferenz maximal der Bearbeitungszeitspanne für bis zu fünf Teilbereiche, besonders bevorzugt für nur einen bis drei Teilbereiche. Falls die Umgebungskarte idealerweise in Teilbereiche mit gleicher Größe und gleichen Parametern unterteilt ist und auch die Bodenbearbeitungsgeräte gleich sind, entspricht die Zeitdifferenz idealerweise maximal nur der Bearbeitungszeitspanne für einen einzigen Teilbereich. In der Praxis unterscheiden sich die Teilbereiche der Umgebung allerdings in Bezug auf eine dort vorliegende Bodenart, einen Verschmutzungsgrad, einen Grundriss, eine Zugänglichkeit von Teilbereichen wie Ecken und Flächen unter Überhängen für bestimmte Bodenbearbeitungsgeräte und weitere Parameter. Die Bodenbearbeitungsgeräte können sich ebenfalls unterscheiden, beispielsweise in Bezug auf deren Fortbewegungsgeschwindigkeit, Bearbeitungsgeschwindigkeit, Kletterfähigkeit, Akkuladestand usw. Daher kann ein erstes Bodenbearbeitungsgerät in der Praxis mit der Bearbeitung einer ersten Teilbereichsgruppe um mehrere Teilbereiche eher mit der Bearbeitung fertig sein als ein zweites Bodenbearbeitungsgerät mit der Bearbeitung einer zweiten Teilbereichsgruppe, oder umgekehrt. Ein typischer Teilbereich, welcher in der Umgebungskarte abgeteilt ist, kann beispielsweise eine Größe von 50 cm x 50 cm aufweisen. Je nach den zuvor genannten Parametern des Teilbereiches und des Bodenbearbeitungsgerätes kann die Bearbeitung eines solchen Teilbereiches eine Zeitspanne von einigen Sekunden bis wenigen Minuten in Anspruch nehmen. Bei der Entscheidung, welcher Teilbereich der Umgebung durch welches Bodenbearbeitungsgerät bearbeitet werden soll, wird berücksichtigt, wie schnell jedes der Bodenbearbeitungsgeräte den jeweiligen Teilbereich bearbeiten kann. Dies hängt ebenfalls von gerätespezifischen Eigenschaften ab, beispielsweise einer maximalen Fortbewegungs- und/oder Bearbeitungsgeschwindigkeit des Bodenbearbeitungsgerätes, einer von dem Bodenbearbeitungsgerät ausgeführten Bodenbearbeitungstätigkeit, einer Eignung des Bodenbearbeitungsgerätes zur Bearbeitung bestimmter Bodenarten, einer aktuellen Position des Bodenbearbeitungsgerätes, einem aktuellen Ladestatus eines Akkumulators des Bodenbearbeitungsgerätes, einem aktuellen Status einer Reinigungsmittelmenge des Bodenbearbeitungsgerätes, wie beispielsweise Wasser, Reinigungszusätze und dergleichen, einem Füllstand einer Schmutzsammelkammer eines Bodenbearbeitungsgerätes oder ähnlichem. Die während der Detektion der Umgebungsmerkmale der Umgebung, beispielsweise im Rahmen einer Erkundungsfahrt eines der Bodenbearbeitungsgeräte, verstrichene Fortbewegungszeitspanne kann auf eine von einem bestimmten Bodenbearbeitungsgerät benötigte individuelle Zeitspanne zur Bearbeitung des jeweiligen Teilbereiches umgerechnet werden. Dazu wird beispielsweise eine Fortbewegungsgeschwindigkeit des die Umgebungsmerkmale detektierenden Bodenbearbeitungsgerätes mit einer charakteristischen Fortbewegungsgeschwindigkeit eines einzuplanenden Bodenbearbeitungsgerätes verglichen. Um einen Vergleich zu ermöglichen, werden die Fortbewegungsroute sowie die Fortbewegungszeitspanne des die Umgebungsmerkmale detektierenden Bodenbearbeitungsgerätes gemeinsam mit der Umgebungskarte abgespeichert. Dies kann entweder durch eine Verknüpfung der Umgebungskarte mit einer die Fortbewegungsroute und/oder die Fortbewegungszeitspanne enthaltenden Datei erfolgen, oder durch unmittelbare Speicherung der Fortbewegungsroute und/oder der Fortbewegungszeitspanne innerhalb der Umgebungskarte. Jedem Teilbereich der Umgebung wird vorzugsweise eine Information derart zugewiesen, ob und gegebenenfalls wo das die Umgebungsmerkmale detektierende Bodenbearbeitungsgerät durch den Teilbereich gefahren ist und wie lange sich das Bodenbearbeitungsgerät dabei in dem Teilbereich aufgehalten hat. Des Weiteren kann die Umgebungskarte oder eine dieser zugeordnete Datei Informationen wie Bodenarten, Verschmutzungsarten, Verschmutzungsgrade oder sonstige Eigenschaften der in den Teilbereichen vorhandenen zu bearbeitenden Bodenflächen beinhalten. Diese Informationen können ebenfalls von dem die Umgebungsmerkmale erkundenden Bodenbearbeitungsgerät detektiert werden. Alternativ wäre es auch möglich, dass ein Nutzer diese Informationen manuell in die erstellte Umgebungskarte oder eine damit verknüpfte Datei einträgt. Ebenso können in der Umgebungskarte oder einer verknüpften Datei Positionen der Bodenbearbeitungsgeräte, Positionen von Versorgungseinrichtungen für diese, d. h. beispielsweise Ladestationen für einen Akkumulator, Entladestationen für Schmutz oder Abwasser, Befüllstationen für Wasser oder Reinigungsmittel, Statusinformationen der Bodenbearbeitungsgeräte wie der Ladezustand eines Akkumulators, ein Füllstand eines Schmutzbehälters oder dergleichen eingetragen werden.

Es wird vorgeschlagen, dass ein virtuelles Gitter über die erstellte Umgebungskarte gelegt wird, um die Fläche der Umgebungskarte in eine Vielzahl einzelner Teilbereiche zu unterteilen. Insbesondere empfiehlt es sich, dass das Gitter gleichgroße Gitterzellen aufweist, um die Umgebungskarte in gleichgroße Teilbereiche zu unterteilen. Grundsätzlich ist es jedoch auch möglich, ein unregelmäßiges Gitter zu verwenden.

Es wird des Weiteren vorgeschlagen, dass für jeden Teilbereich einzeln ermittelt wird, welche gerätespezifische Bearbeitungszeitspanne jedes der Bodenbearbeitungsgeräte zur Bearbeitung dieses Teilbereiches benötigen würde, wobei dasjenige Bodenbearbeitungsgerät zur Bearbeitung dieses Teilbereiches eingeplant wird, dessen ermittelte Bearbeitungszeitspanne am geringsten ist. Da die bei der Detektion der Umgebungsmerkmale zum Erstellen der Umgebungskarte benötigte Fortbewegungszeitspanne charakteristisch für dasjenige Bodenbearbeitungsgerät ist, welches die Detektion vorgenommen hat, ist die auf den jeweiligen Teilbereich der Umgebung entfallende Fortbewegungsteilzeitspanne auf die Fähigkeiten und Merkmale des jeweiligen Bodenbearbeitungsgerätes umzurechnen. Das System kann insbesondere voneinander verschiedene Bodenbearbeitungsgeräte aufweisen, die unterschiedliche Parameter, wie Fahrgeschwindigkeiten bzw. Bearbeitungsgeschwindigkeiten, aufweisen. Daher muss die mit der Umgebungskarte abgespeicherte Fortbewegungszeitspanne auf die individuelle Geschwindigkeit des Bodenbearbeitungsgerätes angepasst werden, um eine vorteilhafte Aufteilung der Teilbereiche der Umgebungskarte auf die Bodenbearbeitungsgeräte zu erreichen, in dem Sinne, dass Bodenbearbeitungstätigkeiten mehrerer Bodenbearbeitungsgeräte im Wesentlichen zeitgleich beendet werden können. Da die Fortbewegungsgeschwindigkeiten der Bodenbearbeitungsgeräte auch abhängig von einer Bodenart, einer Verschmutzungsart und/oder einer Verschmutzungsmenge in dem jeweiligen Teilbereich - und damit der Bearbeitungsgeschwindigkeit - variieren können, ist zu dem jeweiligen Teilbereich der Umgebungskarte vorzugsweise auch eine Bodenart und/oder Verschmutzungsart und/oder Verschmutzungsmenge und/oder ähnliches hinterlegt. Auch diese Informationen tragen zur Berechnung der Bearbeitungszeitspanne für den jeweiligen Teilbereich bei. Wie vorgeschlagen wird zu den Teilbereichen eine geschätzte spezifische Bodenbearbeitungszeit jedes der Bodenbearbeitungsgeräte berechnet, wobei dasjenige Bodenbearbeitungsgerät für die Bodenbearbeitung dieses Teilbereiches eingeplant wird, welches eine geringste berechnete Bearbeitungszeitspanne aufweist. In der Praxis kann das Einplanen dieses Bodenbearbeitungsgerätes zur Bearbeitung eines bestimmten Teilbereiches dadurch erfolgen, dass der Teilbereich in der Umgebungskarte für eine Bearbeitung durch das betreffende Bodenbearbeitungsgerät reserviert wird. Dies kann beispielsweise durch eine farbliche oder anderweitig charakteristische Markierung des Teilbereiches erfolgen.

Des Weiteren wird vorgeschlagen, dass die von einem Bodenbearbeitungsgerät zur Bearbeitung mehrerer Teilbereiche benötigten Bearbeitungszeitspannen zu einer Gesamtbearbeitungszeitspanne aufaddiert werden, wobei dasjenige Bodenbearbeitungsgerät zur Bearbeitung eines weiteren Teilbereiches eingeplant wird, dessen ohne Berücksichtigung der Bearbeitungszeitspanne des weiteren Teilbereiches ermittelte Gesamtbearbeitungszeitspanne für bisher geplante Bodenbearbeitungstätigkeiten am geringsten ist. Da die Einplanung der Teilbereiche für bestimmte Bodenbearbeitungsgeräte iterativ erfolgt, muss für jeden einzelnen Teilbereich neu entschieden werden, welchem Bodenbearbeitungsgerät - und damit auch welcher Teilbereichsgruppe - der jeweilige Teilbereich zugeordnet wird. Da das Ziel der Einteilung der Teilbereiche auf die Bodenbearbeitungsgeräte darin besteht, Teilflächen so zuzuordnen, dass für Teilbereichsgruppen aus mehreren Teilbereichen identische oder zumindest nach Definition hochgradig ähnliche Bodenbearbeitungszeiten entstehen, ist es zweckmäßig, dass nur ein solches Bodenbearbeitungsgerät einen Teilbereich zugewiesen bekommt, dessen bisher geplante Gesamtbearbeitungszeitspanne verglichen mit den bereits geplanten Gesamtbearbeitungszeitspannen der anderen Bodenbearbeitungsgeräte am geringsten ist. Dadurch wird vermieden, dass ein Bodenbearbeitungsgerät, welches stets sehr geringe Bearbeitungszeiten benötigt, für jeden der Teilbereiche eingeplant wird, was dazu führen würde, dass dieses Bodenbearbeitungsgerät eine überwiegende Vielzahl von Bodenbearbeitungstätigkeiten ausführen müsste, so dass schließlich eine diesem Bodenbearbeitungsgerät zugeordnete Teilbereichsgruppe wesentlich später fertiggestellt würde als andere Teilbereichsgruppen. Insofern empfiehlt es sich, dass als Kriterium für die Auswahl eines bestimmten Bodenbearbeitungsgerätes einerseits erfüllt sein muss, dass das Bodenbearbeitungsgerät eine geringste Bearbeitungszeitspanne für einen einzelnen betreffenden Teilbereich aufweist, und zum anderen eine bereits für dieses Bodenbearbeitungsgerät geplante Gesamtbearbeitungszeitspanne geringer ist als die Gesamtbearbeitungszeitspannen anderer Bodenbearbeitungsgeräte. Sollte nur eines dieser Kriterien erfüllt sein, kann geräteseitig definiert sein oder nutzerseitig vorgegeben werden, dass entweder ein Bodenbearbeitungsgerät mit geringster Bearbeitungszeitspanne oder ein Bodenbearbeitungsgerät mit geringster Gesamtbearbeitungszeitspanne gewählt wird.

Vorzugsweise kann vorgesehen sein, dass zu einem für eine Bodenbearbeitung durch eines der Bodenbearbeitungsgeräte bereits eingeplanten Teilbereich oder zu einer für eine Bodenbearbeitung durch eines der Bodenbearbeitungsgeräte bereits eingeplanten Teilbereichsgruppe ein solcher Teilbereich hinzugefügt wird, welcher direkt an den geplanten Teilbereich oder die geplante Teilbereichsgruppe angrenzt. Durch diese Ausgestaltung wird zu einem bereits geplanten Teilbereich bzw. einer bereits geplanten Teilbereichsgruppe bevorzugt ein solcher Teilbereich hinzuaddiert, welcher noch nicht markiert ist und direkten Kontakt zu dem Teilbereich bzw. der Teilbereichsgruppe aufweist.

In diesem Zusammenhang empfiehlt es sich, dass zunächst ein solcher von mehreren angrenzenden, noch nicht eingeplanten Teilbereichen hinzugefügt wird, welcher einen maximalen Abstand zu einem bereits für die Bearbeitung durch ein anderes Bodenbearbeitungsgerät geplanten Teilbereich oder einer bereits für die Bearbeitung durch ein anderes Bodenbearbeitungsgerät geplanten Teilbereichsgruppe aufweist. Dadurch wird erreicht, dass für den Fall, dass mehr als ein Teilbereich direkt an den geplanten Teilbereich oder die geplante Teilbereichsgruppe angrenzt, derjenige Teilbereich für eine Bearbeitung durch das Bodenbearbeitungsgerät eingeplant wird, der einen maximalen Abstand zu geplanten Teilbereichen der anderen Bodenbearbeitungsgeräte aufweist. Somit wird nicht einfach irgendein angrenzender Teilbereich aus einer Vielzahl möglicher infrage kommender Teilbereiche ausgewählt, sondern ein solcher, welcher gleichzeitig möglichst weit von den anderen bereits verplanten Teilbereichen bzw. Teilbereichsgruppen anderer Bodenbearbeitungsgeräte entfernt ist. Somit kann erreicht werden, dass die sich formierenden Teilbereichsgruppen kompakt gehalten werden, insbesondere so, dass auch deren äußerste Teilbereiche möglichst nah an einem aktuellen Ausgangsstartpunkt des Bodenbearbeitungsgerätes liegen. Dies wird regelmäßig dadurch erreicht, dass die insgesamt geplante Teilbereichsgruppe keine längliche Gestalt annimmt, sondern vorzugsweise einen möglichst quadratischen Bereich formt, oder zumindest einen Bereich, dessen Abmessungen in orthogonal stehenden Richtungen nicht übermäßig voneinander abweichen. Bevorzugt wird vorgeschlagen, dass das Verhältnis der Seitenlängen der Teilbereichsgruppen zwischen 1:1 und 1:10, vorzugsweise zwischen 1:1 und 1:5, liegt. Das Verhältnis der Seitenlängen hängt nicht zuletzt auch von einer Verteilung der Startpunkte der Bodenbearbeitungsgeräte über die Fläche der Umgebungskarte ab. Je weiter die Startpunkte der Bodenbearbeitungsgeräte voneinander entfernt sind, desto länglicher können die Teilbereichsgruppen werden.

Vorteilhaft kann vorgesehen sein, dass ein noch keinem Bodenbearbeitungsgerät zugewiesener und nicht an einen bereits für eine Bodenbearbeitung durch eines der Bodenbearbeitungsgeräte geplanten Teilbereich oder eine geplante Teilbereichsgruppe angrenzender Teilbereich zur Bearbeitung einem Bodenbearbeitungsgerät zugewiesen wird, dessen aktueller Standort einen geringsten Abstand zu dem noch nicht zugewiesenen Teilbereich aufweist. Durch die Zuordnung eines solchen Teilbereiches zu einem nächstliegenden Bodenbearbeitungsgerät wird wiederum erreicht, dass die Gestalt der betreffenden Teilbereichsgruppe so kompakt wie möglich gehalten wird. Durch diese Ausführung können allerdings Teilbereiche entstehen, die zwar zu einer Teilbereichsgruppe gehören, jedoch nicht direkt an diese angrenzen. Derartige separiert in der Umgebungskarte liegende Teilbereiche einer Teilbereichsgruppe können bezüglich ihrer Flächengröße mit einer definierten Mindestflächengröße verglichen werden, um Teilbereiche, welche die Mindestflächengröße nicht aufweisen, einem anderen Bodenbearbeitungsgerät zuzuordnen, nämlich vorzugsweise einem solchen Bodenbearbeitungsgerät, dessen Bodenbearbeitungsbereich, d. h. dessen zugeordnete Teilbereichsgruppe, an den separierten Teilbereich angrenzt.

Gemäß einer weiteren Ausführung kann vorgesehen sein, dass die Zusammenfassung der Teilbereiche zu Teilbereichsgruppen auf der Basis eines erstellten Grundrisses der Umgebung erfolgt, so dass Raumbegrenzungen des Grundrisses Teilbereichsgruppen begrenzen, wobei für jede Teilbereichsgruppe ermittelt wird, welche Bearbeitungszeitspanne das jeweilige Bodenbearbeitungsgerät zur Bearbeitung dieser Teilbereichsgruppe benötigen würde, und wobei die Teilbereichsgruppen den Bodenbearbeitungsgeräten für eine Bodenbearbeitung so zugeordnet werden, dass die Bodenbearbeitungen der Teilbereichsgruppen im Wesentlichen gleichzeitig beendet werden. Gemäß dieser Ausführung wird die Gesamtfläche der Umgebungskarte zunächst in funktionale Teilbereichsgruppen, beispielsweise Räume einer Wohnung, unterteilt. Jede Teilbereichsgruppe kann ebenfalls wieder eine Vielzahl von Teilbereichen aufweisen. Wie zuvor bereits beschrieben werden die Bodenbearbeitungszeiten der einzelnen Teilbereiche und somit auch der bereits bestimmten Teilbereichsgruppen anhand der zu der Umgebungskarte hinterlegten Informationen über Fortbewegungsroute und Fortbewegungszeitspanne bestimmt. Die Teilbereichsgruppen, zu welchen bekannt ist, welches Bodenbearbeitungsgerät welche Bearbeitungszeitspanne zu deren Bearbeitung benötigen würde, werden anschließend den Bodenbearbeitungsgeräten des Systems so zugeteilt, dass die Bodenbearbeitungen der Teilbereichsgruppen soweit wie möglich gleichzeitig fertiggestellt werden können. Bei der Zuordnung der Teilbereichsgruppen zu den Bodenbearbeitungsgeräten werden vorzugsweise die Startpositionen der Bodenbearbeitungsgeräte innerhalb der Umgebungskarte berücksichtigt, so dass eine bestimmte Teilbereichsgruppe einem solchen Bodenbearbeitungsgerät zugeordnet wird, welches die geringste Entfernung und/oder Fahrzeit zu der betreffenden Teilbereichsgruppe aufweist.

Schließlich empfiehlt es sich grundsätzlich, dass eine Bodenbearbeitungstätigkeit eines Bodenbearbeitungsgerätes in einem bestimmten Teilbereich nur dann geplant wird, wenn das Bodenbearbeitungsgerät für eine Bodenbearbeitung dieses Teilbereiches geeignet ist. Beispielsweise kann ein Teilbereich oder eine Teilbereichsgruppe einen Teppichboden aufweisen, welcher durch Staubsauger gereinigt werden kann, jedoch nicht durch Wischgeräte. Bei der zuvor beschriebenen Teilbereichs-Zuweisung werden somit auch die Art des Bodenbearbeitungsgerätes und des Bodens, sowie gegebenenfalls andere relevante Eigenschaften berücksichtigt.

Die Aufteilung der Fläche der Umgebungskarte in Teilbereiche kann durch eine zentrale Recheneinrichtung des Systems ausgeführt werden, oder durch eine lokale Recheneinrichtung eines der Bodenbearbeitungsgeräte, insbesondere desjenigen Bodenbearbeitungsgerätes, welches auch die Umgebungsmerkmale für die Umgebungskarte detektiert und anschließend die Umgebungskarte erstellt hat. Eine andererseits zentrale Recheneinrichtung kann beispielsweise in einer sogenannten Cloud installiert sein. Jedoch können auch lokale Recheneinrichtungen der Bodenbearbeitungsgeräte als zentrale Recheneinrichtung fungieren, so dass die Berechnungen der Teilbereiche und Teilbereichsgruppen durch ein Bodenbearbeitungsgerät des Systems erfolgt. Nach der Aufteilung der Umgebungskarte in Teilbereiche und Teilbereichsgruppen wird die Umgebungskarte mit den Bearbeitungsinformationen zu dem jeweiligen Bodenbearbeitungsgerät des Systems gesendet oder zum Abrufen bereitgestellt. Jedes der Bodenbearbeitungsgeräte des Systems kann anschließend die für das jeweilige Bodenbearbeitungsgerät eingeplanten Bodenbearbeitungstätigkeiten durchführen. Es empfiehlt sich insbesondere, dass jedes Bodenbearbeitungsgerät bei einer Durchführung der Bodenbearbeitungstätigkeit überprüft, ob eine geplante, geschätzte Bodenbearbeitungszeitspanne für den jeweiligen Teilbereich und/oder die Teilbereichsgruppe eingehalten werden kann. Sofern die Recheneinrichtung des Bodenbearbeitungsgerätes oder des Systems feststellt, dass die Bodenbearbeitungstätigkeit nicht in der geplanten Bearbeitungszeitspanne durchgeführt werden kann, so können Teilbereiche, die an die Teilbereiche anderer Bodenbearbeitungsgeräte angrenzen, dem jeweils benachbarten Bodenbearbeitungsgerät zugeordnet werden. Damit wird erreicht, dass die zuvor getätigten Planungsberechnungen auch noch während der Ausführung der Bodenbearbeitungstätigkeit überprüft werden und gegebenenfalls angepasst werden können, um zu erreichen, dass eine Bodenbearbeitung einer ersten Teilbereichsgruppe im Wesentlichen gleichzeitig mit einer Bodenbearbeitung einer zweiten Teilbereichsgruppe beendet wird.

Um eine gerätespezifische Bearbeitungszeitspanne eines Bodenbearbeitungsgerätes ermitteln zu können, werden charakteristische Parameter des jeweiligen Bodenbearbeitungsgerätes berücksichtigt, wobei es sich bei den Parametern einerseits um stets vorhandene Parameter handeln kann, und andererseits um variable Parameter. Zu den variablen Parametern gehören beispielsweise ein Akkumulator-Ladezustand eines Akkumulators des Bodenbearbeitungsgerätes oder ein Füllstand eines Frischwassertanks, eines Schmutzwassertanks, eines Sauggutbehälters oder ähnlichem. Permanent vorhandene Parameter können beispielsweise die Ausbildung des Bodenbearbeitungsgerätes als Sauggerät oder Wischgerät sein, ein stets an dem Bodenbearbeitungsgerät vorhandenes Werkzeug, eine maximale Arbeitsgeschwindigkeit und/oder Fortbewegungsgeschwindigkeit und ähnliches. Derartige Parameter des Bodenbearbeitungsgerätes bestimmen unter anderem die Bearbeitungszeitspanne, die das Bodenbearbeitungsgerät insgesamt zur Bearbeitung eines Teilbereiches der Umgebung benötigt. Bei der Einplanung eines Bodenbearbeitungsgerätes zur Bearbeitung eines bestimmten Teilbereiches empfiehlt es sich, beispielsweise den Ladezustand eines Akkumulators eines Bodenbearbeitungsgerätes zu berücksichtigen und in Abhängigkeit davon auch die Bodenbearbeitungszeitspanne, die ohne erneutes Wiederaufladen des Akkumulators bewältigt werden kann. Diese Bearbeitungszeitspanne kann bei der Zuordnung der Teilbereiche insofern berücksichtigt werden, als das Teilbereiche, welche eine Bearbeitungszeit beanspruchen, die größer ist als die maximal ausführbare Bearbeitungszeitspanne, nicht von dem betreffenden Bodenbearbeitungsgerät bearbeitet werden können. Bei der Planung der Teilbereiche bedeutet dies, dass für ein bestimmtes Bodenbearbeitungsgerät dann gegebenenfalls keine weiteren Teilbereiche der Umgebung eingeplant werden können und eine maximale Größe der für dieses Bodenbearbeitungsgerät bestimmten Teilbereichsgruppe erreicht ist. Ebenso wird vorzugsweise verfahren, wenn andere Einrichtungen des Bodenbearbeitungsgerätes die maximal mögliche Bearbeitungszeitspanne limitieren, beispielsweise ein Fassungsvermögen und/oder Füllstand von Einrichtungen wie Frischwassertank, Schmutzwassertank und/oder Schmutzbehälter.

Des Weiteren empfiehlt es sich, bei der Festlegung der Teilbereichsgruppen bzw. der späteren Bodenbearbeitung der Teilbereichsgruppen zu verhindern, dass Bodenbearbeitungsgeräte miteinander kollidieren. Zur Vermeidung einer Kollision wird vorzugsweise zunächst eine Fortbewegungsroute für ein erstes Bodenbearbeitungsgerät geplant und werden die zugehörigen Teilbereiche mit einer Zeitangabe markiert, die angibt, wann das Bodenbearbeitungsgerät einen bestimmten Teilbereich befährt und wieder verlässt. Bezogen auf die Fortbewegungsroute für ein zweites Bodenbearbeitungsgerät müssen die markierten Teilbereiche in dem angegebenen Zeitraum gemieden werden. Dadurch wird erreicht, dass es nicht zu Kollisionen kommt. Falls keine solche Kollisionsvermeidung im Voraus programmiert wird, kann es zu Situationen kommen, in denen sich zwei Bodenbearbeitungsgeräte begegnen. Dadurch wird eine Bodenbearbeitung zwar nicht verhindert, aber es kann zu Verzögerungen in der Bodenbearbeitung kommen, da die Bodenbearbeitungsgeräte eine bereits vorgeplante Fortbewegungsroute verlassen müssen, um dem anderen Bodenbearbeitungsgerät auszuweichen.

Des Weiteren ist es auch möglich, eine für ein Bodenbearbeitungsgerät geplante Fortbewegungsroute und/oder die Zugehörigkeit eines oder mehrerer Teilbereiche zu den festgelegten Teilbereichsgruppen zu variieren, um auf beispielsweise äußere Einflüsse oder Änderungen des Energieverbrauchs eines Bodenbearbeitungsgerätes, oder andere variierende Parameter des Bodenbearbeitungsgerätes reagieren zu können. Wenn beispielsweise bei einem Bodenbearbeitungsvorgang festgestellt wird, dass das der jeweiligen Teilbereichsgruppe zugeordnete Bodenbearbeitungsgerät mehr oder weniger Energie benötigt als geplant, dann könnte eine Neuzuordnung der Teilbereiche zu den geplanten Teilbereichsgruppen der Umgebung erfolgen.

Schließlich wird mit der Erfindung auch ein System mit mindestens zwei Bodenbearbeitungsgeräten vorgeschlagen, wobei das System zur Durchführung eines zuvor beschriebenen Verfahrens ausgebildet und eingerichtet ist. Das System kann zwei oder mehr Bodenbearbeitungsgeräte beinhalten, die insbesondere sich selbsttätig fortbewegende Bodenbearbeitungsgeräte sind und beispielsweise als Saug- und/oder Wischgeräte, Poliergeräte, Schleifgeräte, Mähgeräte oder andere ausgebildet sind.

### Kurze Beschreibung der Zeichnungen

Im Folgenden wird die Erfindung anhand von Ausführungsbeispielen näher erläutert. Es zeigen:
- Fig. 1: einen Grundriss einer Wohnung,
- Fig. 2a-b: eine Zuordnung von Teilbereichen des Grundrisses zu zwei Bodenbearbeitungsgeräten,
- Fig. 3: einen Raum des Grundrisses mit einer Fortbewegungsroute eines Bodenbearbeitungsgerätes,
- Fig. 4a-j: eine Zuordnung von Teilbereichen des Grundrisses zu zwei Bodenbearbeitungsgeräten,
- Fig. 5a-b: eine Zuordnung von Teilbereichsgruppen zu zwei Bodenbearbeitungsgeräten.

### Beschreibung der Ausführungsformen

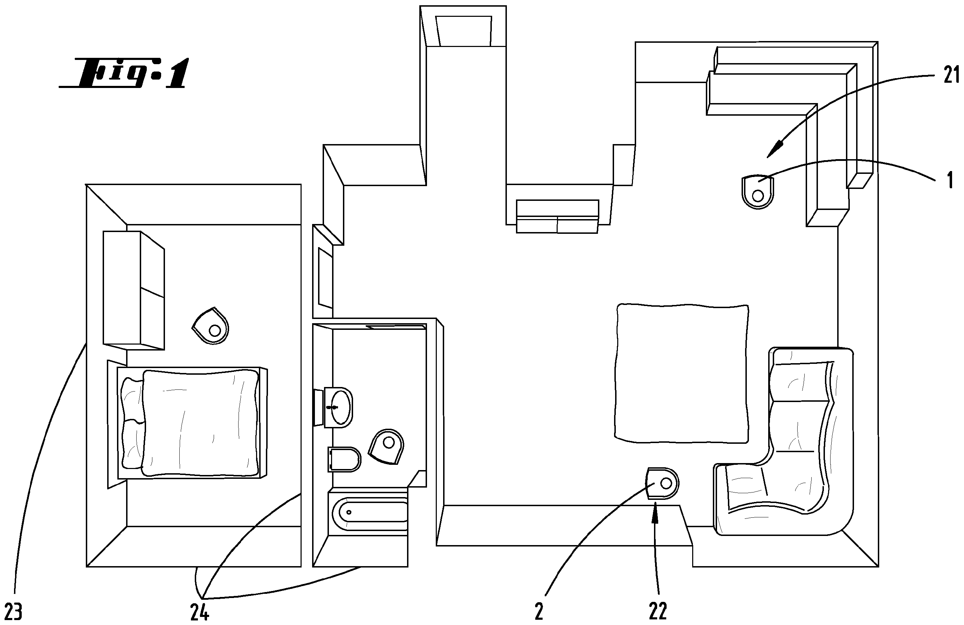

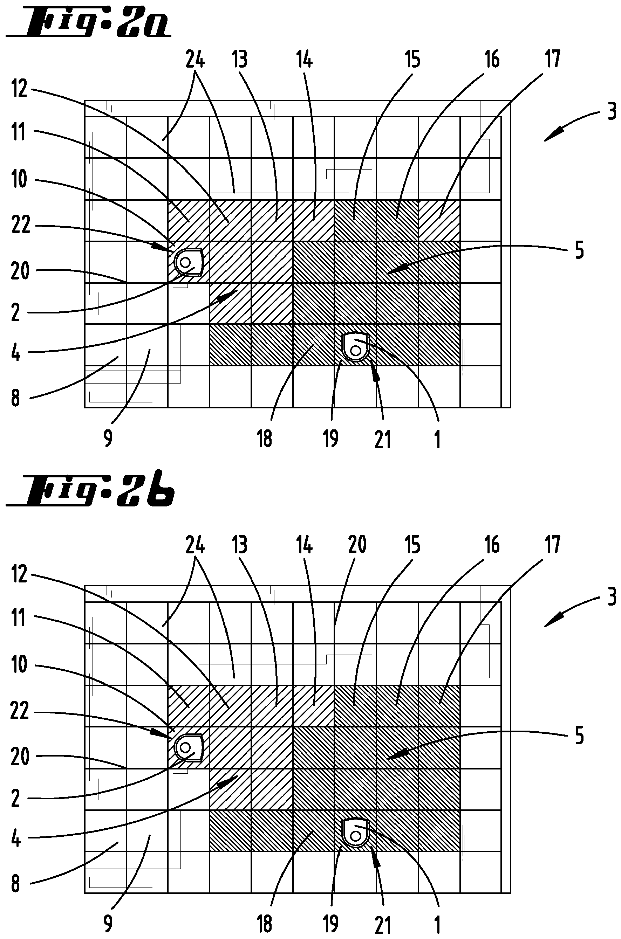

Figur 1 zeigt einen Grundriss 23 einer Wohnung mit mehreren Räumen, die durch Raumbegrenzungen 24 voneinander getrennt sind. In den Räumen befinden sich wie üblich Möbelstücke sowie mehrere Bodenbearbeitungsgeräte 1, 2, hier Reinigungsroboter, von welchen zwei exemplarisch als erstes Bodenbearbeitungsgerät 1 und zweites Bodenbearbeitungsgerät 2 bezeichnet sind. Jedes der Bodenbearbeitungsgeräte 1, 2 ist als sich selbsttätig fortbewegendes Bodenbearbeitungsgerät 1, 2 ausgebildet. Für eine selbsttätige Navigation verfügen die Bodenbearbeitungsgeräte 1, 2 über eine Navigations- und Selbstlokalisierungseinrichtung, die eingerichtet ist, das jeweilige Bodenbearbeitungsgerät 1, 2 anhand einer Umgebungskarte 3 (siehe beispielsweise Figuren 2a und 2b) durch die Wohnung zu navigieren. Die Umgebungskarte 3 ist vorzugsweise eine selbst von dem Bodenbearbeitungsgerät 1, 2 erstellte Umgebungskarte 3, die den Grundriss 23 der Umgebung, die Möbelstücke, Raumbegrenzungen 24 und die Standorte 21, 22 der Bodenbearbeitungsgeräte 1, 2 enthält. Anhand der Umgebungskarte 3 kann des Weiteren eine Fortbewegungsroute 25 durch die Räume der Wohnung festgelegt werden. Zum Erstellen der Umgebungskarte 3 verfügt das Bodenbearbeitungsgerät 1, 2 vorzugsweise über eine Abstandsmesseinrichtung, welche Abstände zu Hindernissen, beispielsweise Möbelstücken und Raumbegrenzungen 24, der Umgebung misst. Die gemessenen Abstände werden schließlich zu der Umgebungskarte 3 weiterverarbeitet. Die Abstandsmesseinrichtung kann eine optische Messeinrichtung, insbesondere ein Laserscanner, sein.

Die Figuren 2a und 2b zeigen eine beispielhafte Umgebungskarte 3 mit einer Aufteilung einer Umgebung in eine Vielzahl einzelner Teilbereiche 10 - 19. Möbelstücke und Raumbegrenzungen 24 sind nur angedeutet. Wie dargestellt, ist ein Gitter 20 mit einer Vielzahl von hier beispielsweise gleichgroßen Gitterzellen 8, 9 über die Umgebungskarte 3 gelegt, so dass sich die Teilbereiche 10 - 19 ergeben. Jedem der in der Umgebung anwesenden Bodenbearbeitungsgeräte 1, 2 ist eine Mehrzahl von Teilbereichen 10 - 19 zugeordnet, die zusammen Teilbereichsgruppen 4, 5 bilden. Jede der Teilbereichsgruppen 4, 5 ist nur einem der Bodenbearbeitungsgeräte 1, 2 zugeordnet, wobei die jeweilige Teilbereichsgruppe 4, 5 den Teilbereich 10, 19 mit dem Standort 21, 22 des korrespondierenden Bodenbearbeitungsgerätes 1, 2 beinhaltet.

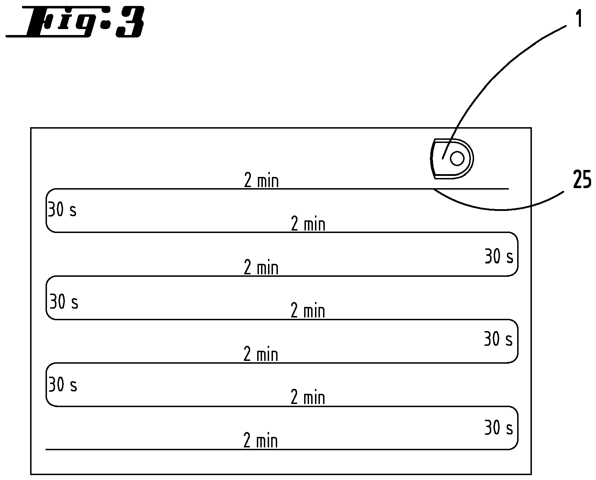

Figur 3 zeigt lediglich beispielhaft einen Raum einer Umgebung, in welchem eine Fortbewegungsroute 25 eines Bodenbearbeitungsgerätes 1, 2 eingezeichnet ist. Die Fortbewegungsroute 25 zieht sich mäanderförmig durch den Raum, wobei der Fortbewegungsroute 25 Zeitangaben zugeordnet sind, welche die Fortbewegungszeit eines Bodenbearbeitungsgerätes 1 in einem jeweiligen Teilabschnitt der Fortbewegungsroute 25 charakterisieren. Hier enthält die Fortbewegungsroute 25 beispielsweise lange und kurze Teilabschnitte der Mäanderform, wobei das Bodenbearbeitungsgerät 1 hier beispielsweise für die langen Teilabschnitte zwei Minuten Fortbewegungszeit benötigt und für die kurzen Teilabschnitte dreißig Sekunden Fortbewegungszeit.

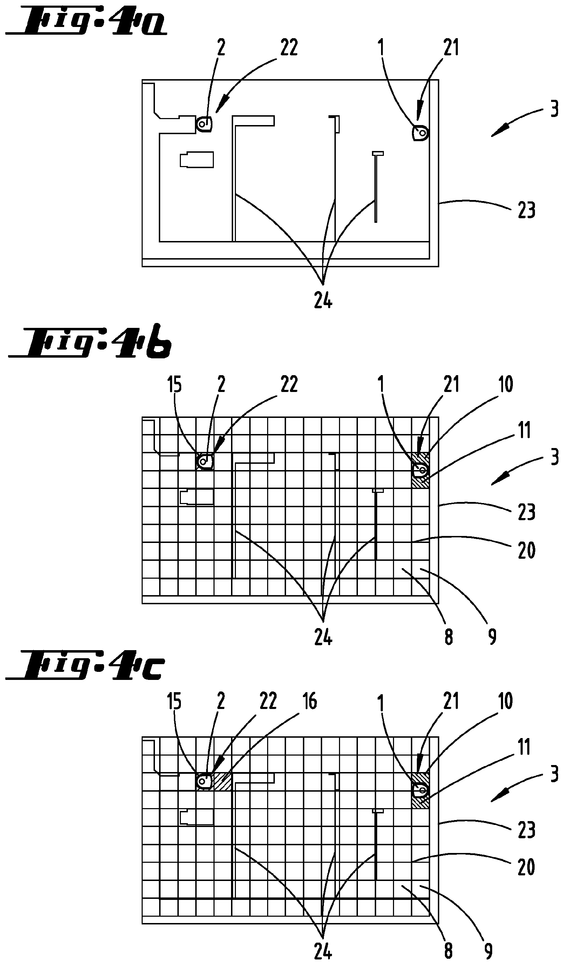

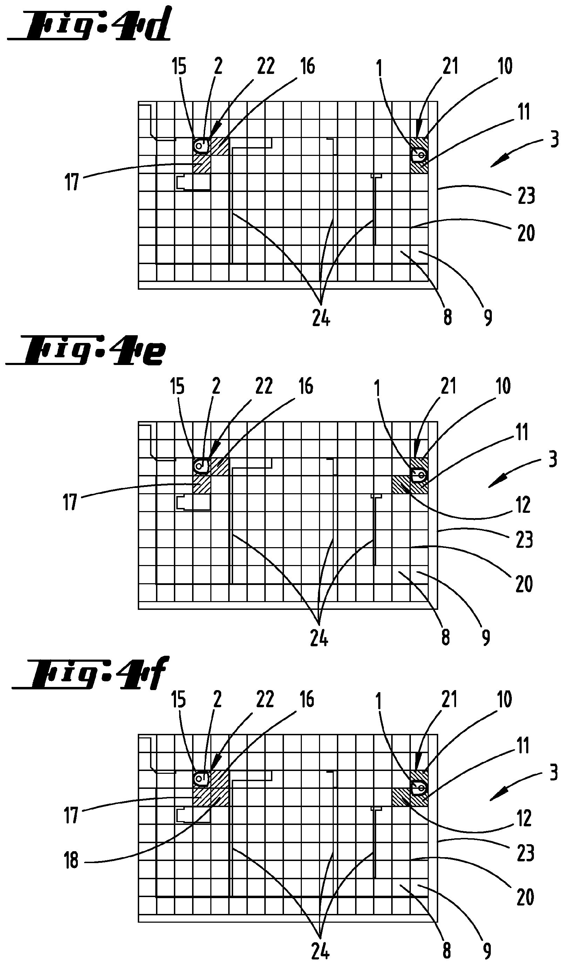

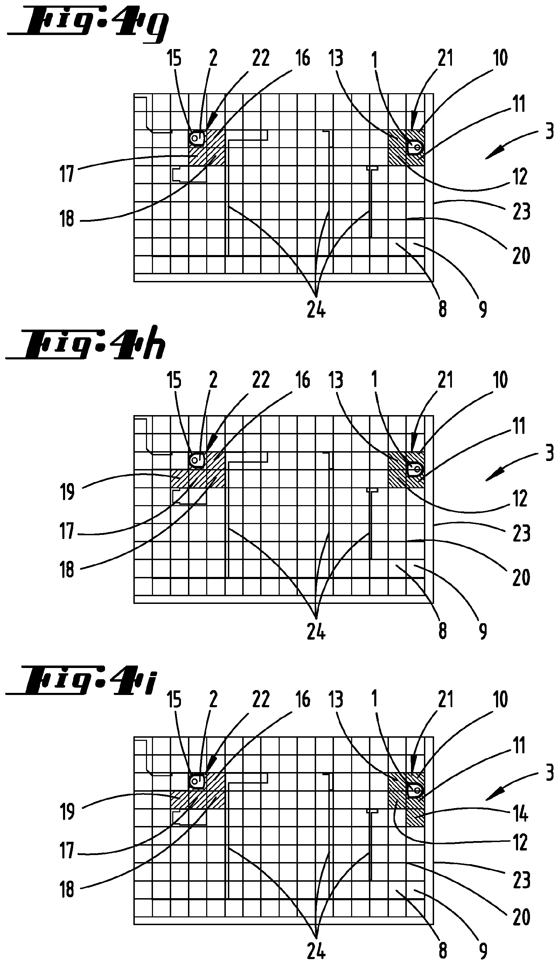

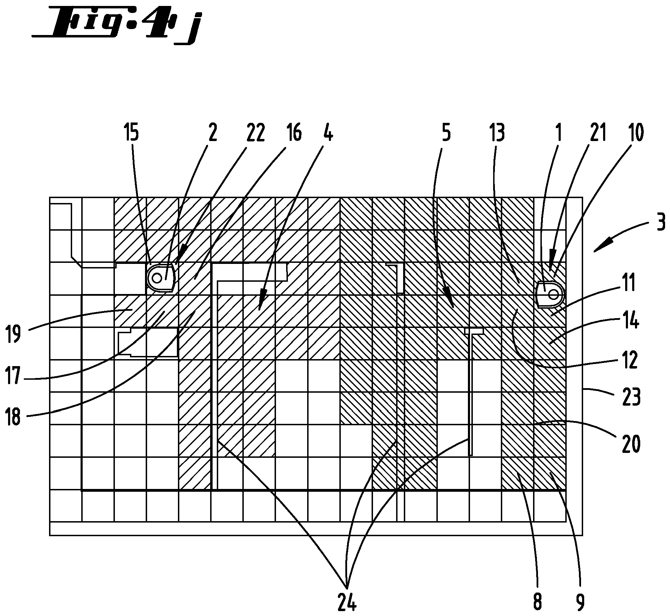

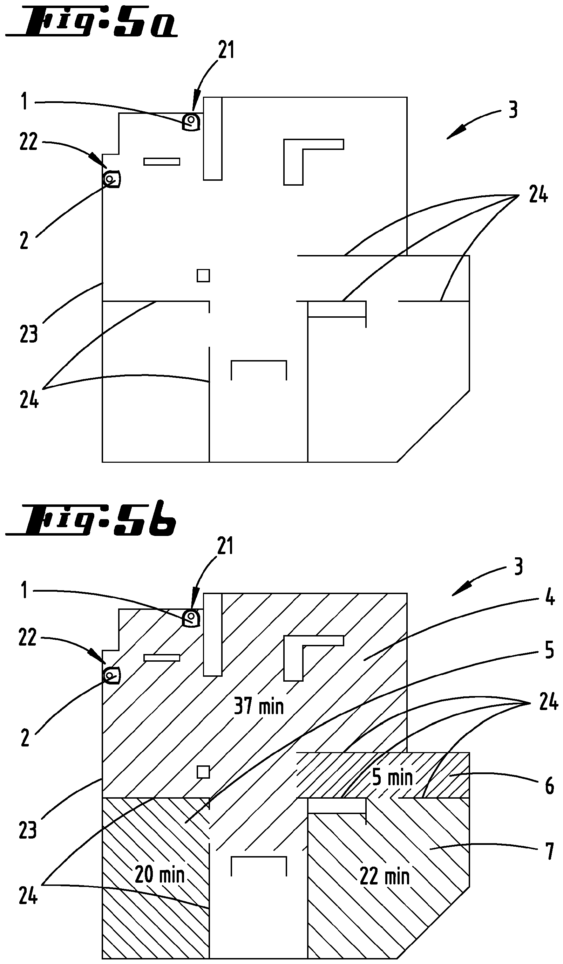

Die Figuren 4 (Figur 4a bis 4j) und 5 (Figur 5a und 5b) zeigen beispielhaft zwei verschiedene Ausführungsformen der Erfindung, bei welchen eine Vielzahl von zu bearbeitenden Teilbereichen 10 - 19 mehreren Bodenbearbeitungsgeräten 1, 2 eines Bodenbearbeitungssystems so zugeordnet wird, dass die Bodenbearbeitungsgeräte 1, 2 ihre Bodenbearbeitungstätigkeiten im Wesentlichen gleichzeitig fertigstellen. Hierzu wird im Folgenden näher auf die Figuren eingegangen.

Die Erfindung funktioniert beispielsweise so, dass ein Bodenbearbeitungsgerät 1, 2 des Systems, vorzugsweise ein Bodenbearbeitungsgerät 1, 2, welches später auch Teilbereiche 10 - 19 der Umgebung bearbeiten wird, zunächst eine Umgebungskarte erstellt und hierzu die Umgebung abfährt. Während das Bodenbearbeitungsgerät 1, 2 die Umgebungsmerkmale zur Erstellung der Umgebungskarte 3 detektiert, wird dessen Fortbewegungsroute 25 aufgezeichnet. Der Fortbewegungsroute 25 wird eine Fortbewegungszeitspanne zugeordnet, welche diejenige Zeitspanne angibt, die das Bodenbearbeitungsgerät 1, 2 benötigt, um die Fortbewegungsroute 25 abzufahren. Die Fortbewegungsroute 25 ist hier beispielsweise die in Figur 3 dargestellte Fortbewegungsroute 25. Teilstücke der Fortbewegungsroute 25 sind dort mit zugehörigen Teil-Zeitspannen vermerkt, innerhalb welcher sich das Bodenbearbeitungsgerät 1, 2 in dem jeweiligen Teilstück der Fortbewegungsroute 25 aufgehalten hat. Die Fortbewegungsroute 25 sowie die charakteristische Fortbewegungszeitspanne dieses Bodenbearbeitungsgerätes 1, 2 werden in Verbindung mit der Umgebungskarte 3 abgespeichert, vorzugsweise in einem lokalen Speicher des Bodenbearbeitungsgerätes 1, 2 oder einer separaten Speichereinrichtung des Systems, die allen Bodenbearbeitungsgeräten 1, 2 zugänglich ist. Während der Fortbewegung entlang der Fortbewegungsroute 25 kann das Bodenbearbeitungsgerät 1, 2 des Weiteren Eigenschaften der Umgebung detektieren und ebenfalls in der Umgebungskarte 3 vermerken bzw. verlinkt mit der Umgebungskarte 3 abspeichern. Eigenschaften der Umgebung sind beispielsweise eine Beschaffenheit einer Bodenfläche, unter anderem eine Bodenart, beispielsweise unterteilt in Hartboden und Teppichboden, ein Verschmutzungsgrad der Umgebung, eine Art und Stärke der Verschmutzung. Des Weiteren kann das Bodenbearbeitungsgerät 1, 2 die aktuellen Aufenthaltsorte von Bodenbearbeitungsgeräten 1, 2 des Systems sowie Orte von Versorgungseinrichtungen für die Bodenbearbeitungsgeräte 1, 2 detektieren. Zu den Versorgungseinrichtungen gehören beispielsweise Akkumulator-Ladestationen, Versorgungs- und Entsorgungsstationen für Wasser, Reinigungsmittel, Reinigungszubehör und dergleichen. Das Bodenbearbeitungsgerät 1, 2 befährt vorzugsweise die gesamte Umgebung, d. h. die gesamte Wohnung des Nutzers, und zeichnet die Umgebungsmerkmale auf. Anschließend ist nicht nur die Umgebungskarte 3 selbst bekannt, sondern auch die Fortbewegungsroute 25, die zugehörige Fahrzeit (Fortbewegungszeitspanne) des verbundenen Bodenbearbeitungsgerätes 1, 2, Bodenarten und gegebenenfalls weitere von dem Bodenbearbeitungsgerät 1, 2 detektierte Parameter.

Im Folgenden wird die Umgebung der Bodenbearbeitungsgeräte 1, 2 nun so aufgeteilt, dass die zu bearbeitende Bodenfläche effizient und für den Nutzer vorteilhaft so gereinigt wird, dass alle Bodenbearbeitungsgeräte 1, 2 des Systems ihre Bodenbearbeitungen nahezu gleichzeitig beenden und somit die Umgebung "auf einen Schlag" vollständig gereinigt ist. Zu diesem Zweck ist vorgesehen, dass die Bodenbearbeitungsgeräte 1, 2 zeitgleich Bodenbearbeitungstätigkeiten in verschiedenen Teilbereichen 10 - 19 der Umgebung ausführen.

Wie in den Figuren 2a und 2b dargestellt, wird dazu zunächst das Gitter 20 über die Umgebungskarte 3 gelegt, so dass hier gleichgroße Teilbereiche 10 - 19 in der Umgebungskarte 3 abgeteilt werden. Jede Gitterzelle 8, 9 bildet einen eigenständigen Teilbereich 10 - 19. Anschließend wird jeder Teilbereich 10 - 19 einem der Bodenbearbeitungsgeräte 1, 2 zur Bearbeitung zugeteilt. Zunächst wird dabei so vorgegangen, dass eine gerätespezifische Bearbeitungszeitspanne jedes einzelnen Bodenbearbeitungsgerätes 1, 2 für eine Bearbeitung des jeweiligen Teilbereiches 10 - 19 berechnet wird. Zu diesem Zweck werden die zuvor gemäß Figur 3 aufgezeichnete Fortbewegungsroute 25 und Fortbewegungszeitspanne an die charakteristischen Parameter des jeweiligen Bodenbearbeitungsgerätes 1, 2 angepasst. Hierzu wird insbesondere die bei der Erkundungsfahrt entlang der Fortbewegungsroute 25 gemessene Fortbewegungszeitspanne auf die Fähigkeiten des Bodenbearbeitungsgerätes 1, 2, insbesondere dessen spezifische Fortbewegungsgeschwindigkeit während der auszuführenden Bearbeitungstätigkeit, "kalibriert". Dasjenige Bodenbearbeitungsgerät 1, 2, welches nach den Berechnungen die geringste gerätespezifische Bearbeitungszeitspanne benötigt, wird dann für die Bearbeitung des betreffenden Teilbereiches 10 - 19 eingeteilt. In Bezug auf die in den Figuren 2a und 2b dargestellte Umgebungskarte 3 bedeutet dies, dass entsprechende Gitterzellen 8, 9 als für dieses Bodenbearbeitungsgerät 1, 2 "reserviert" markiert werden. Das Bodenbearbeitungsgerät 1, 2 mit der geringsten charakteristischen Bearbeitungszeitspanne bekommt allerdings nur dann den Zuschlag zur Bodenbearbeitung des jeweiligen Teilbereiches 10 - 19, wenn gleichzeitig die bisher für dieses Bodenbearbeitungsgerät 1, 2 eingeteilten ("reservierten") Teilbereiche 10 - 19 in der Gesamtsumme eine Gesamtbearbeitungszeitspanne beanspruchen, die geringer ist als die aufsummierten Gesamtbearbeitungszeitspannen der anderen Bodenbearbeitungsgeräte 1, 2 des Systems. Somit erhält nur dasjenige Bodenbearbeitungsgerät 1, 2, dessen bisher insgesamt zur Bearbeitung geplante Teilfläche eine geringste Bodenbearbeitungszeit benötigt, eine Zuordnung zu diesem Teilbereich 10 - 19. Diese Methodik stellt sicher, dass die Bodenbearbeitungsgeräte 1, 2 des Systems im Wesentlichen zeitgleich ihre Bodenbearbeitungstätigkeiten innerhalb der Umgebung beenden werden. Die Teilbereiche 10 - 19 der Umgebungskarte 3 werden nacheinander so den Bodenbearbeitungsgeräten 1, 2 zugeteilt, bis schließlich alle Teilbereiche 10 -19 einem der Bodenbearbeitungsgeräte 1, 2 zugeordnet sind.

Wie in Figur 2a und 2b dargestellt, wird zur Bearbeitung durch eines der Bodenbearbeitungsgeräte 1, 2 zunächst derjenige Teilbereich 10, 19 vorgemerkt, in welchem sich der aktuelle Standort 21, 22 des Bodenbearbeitungsgerätes 1, 2 befindet. Dies ist üblicherweise ein Ausgangspunkt des Bodenbearbeitungsgerätes 1, 2 an einer zugeordneten Basisstation. Ausgehend von der den jeweiligen Standort 21, 22 beinhaltenden Gitterzelle 8, 9 (= Teilbereich 10,19) werden dann die übrigen Teilbereiche 11 - 18 der Umgebungskarte 3 eingeplant, wobei als nächstes bevorzugt ein dem Standort 21, 22 nächstliegender Teilbereich 11, 18 zur Bearbeitung zugeteilt wird. Es wird somit zuerst derjenige Teilbereich 11 - 18 markiert, welcher bisher noch nicht zur Bearbeitung eingeplant ist und direkt an die bereits zugeteilten Teilbereiche 10, 19 der Bodenbearbeitungsgeräte 1, 2 angrenzt. Wenn mehr als ein Teilbereich 11 - 18 diese Forderungen erfüllt, wird derjenige Teilbereich 11 - 18 zur Bearbeitung durch ein erstes Bodenbearbeitungsgerät 1, 2 eingeteilt, welcher einen maximalen Abstand zu für ein anderes Bodenbearbeitungsgerät 1, 2 eingeteilten Teilbereichen 10 -19 aufweist.

Ein einem bestimmten Bodenbearbeitungsgerät 2 zugeordneter Teilbereich 17, welcher keinen direkten Kontakt zu demselben Bodenbearbeitungsgerät 2 ebenfalls zugeordneten Teilbereichen 10 - 14 aufweist (siehe Figur 2a), wird vorzugsweise dem Bodenbearbeitungsgerät 1 zugeordnet, dessen Ausgangsstandort einen geringsten Abstand zu dem noch nicht eingeteilten Teilbereich 17 aufweist. Separate Teilbereiche 10 - 19, die nicht direkt mit anderen Teilbereichen 10 - 19 desselben Bodenbearbeitungsgerätes 1, 2 verbunden sind, können beispielsweise hinter Hindernissen, Möbelstücken, Wänden etc. entstehen. Wie in Figur 2a dargestellt existiert beispielsweise ein separater Teilbereich 17, welcher zunächst dem zweiten Bodenbearbeitungsgerät 2 zugeteilt ist, jedoch nicht an die übrigen Teilbereiche 10 - 14 dieses Bodenbearbeitungsgerätes 2 angrenzt. Zur Optimierung der Routenplanung der Bodenbearbeitungsgeräte 1, 2 kann vorgesehen sein, dass ein solcher separater Teilbereich 17 dann einem anderen Bodenbearbeitungsgerät 1, 2 zugeordnet wird, wenn der Teilbereich 17 eine definierte Mindestgröße nicht überschreitet. Hier wird der Teilbereich 17 demgemäß beispielsweise dem anderen Bodenbearbeitungsgerät 1 zugeordnet (siehe Figur 2b). Für jedes der Bodenbearbeitungsgeräte 1, 2 entsteht in der Umgebungskarte 3 somit eine Teilbereichsgruppe 4, 5, die eine Mehrzahl von Teilbereichen 10 - 19 aufweist, welche das jeweilige Bodenbearbeitungsgerät 1, 2 bearbeiten soll. Dem ersten Bodenbearbeitungsgerät 1 sind hier gemäß Figur 2b schließlich die Teilbereiche 15 - 19 zugeordnet, während das zweite Bodenbearbeitungsgerät 2 für eine Bearbeitung der Teilbereiche 10 - 14 eingeteilt ist.

Die Aufteilung der Teilbereiche 10 - 19 unter den Bodenbearbeitungsgeräten 1, 2 wird vorzugsweise zentral durchgeführt, beispielsweise mittels einer Recheneinrichtung, die einem Server des Systems zugeordnet ist. Der Server kann sich beispielsweise in einer sogenannten "Cloud" befinden, auf einem lokalen Rechner eines Haushalts oder innerhalb eines Bodenbearbeitungsgerätes 1, 2 selbst. Wenn die Aufteilung der Teilbereiche 10 - 19 abgeschlossen ist, wird die mit den Markierungen versehene Umgebungskarte 3 zu den jeweiligen Bodenbearbeitungsgeräten 1, 2 des Systems übermittelt bzw. für diese zum Abruf bereitgestellt, so dass die Bodenbearbeitungstätigkeiten gestartet werden können. Es kann vorgesehen sein, dass die Bodenbearbeitungsgeräte 1, 2 während der Ausführung der Bodenbearbeitungstätigkeit überprüfen, ob die geplante gerätespezifische Bearbeitungszeitspanne eingehalten werden kann. Sofern beispielsweise durch ein unvorhergesehenes Ereignis, zum Beispiel einen Aufenthalt einer Person in einem Teilbereich 10 - 19, eine Bearbeitungszeitspanne nicht eingehalten werden kann, können Teilbereiche 10 - 19, die beispielsweise an die Teilbereiche 10 - 19 anderer Bodenbearbeitungsgeräte 1, 2 angrenzen, den anderen Bodenbearbeitungsgeräten 1, 2 zugeordnet werden. Damit wird erreicht, dass während der Bodenbearbeitung eine Überwachung der Einhaltung der geplanten Bearbeitungszeitspanne derart durchgeführt wird, dass die Bodenbearbeitungsgeräte 1, 2 die Bearbeitung der ihnen zugeteilten Teilbereichsgruppen 4 - 7 zeitgleich im Wesentlichen beenden.

Anhand der Figuren 4a bis 4j wird nun ein weiteres Beispiel einer Zuordnung von Teilbereichen 10 - 19 zu zwei verschiedenen Bodenbearbeitungsgeräten 1, 2 gezeigt, wobei für jedes der Bodenbearbeitungsgeräte 1, 2 eine Teilbereichsgruppe 4, 5 gebildet wird, die eine Mehrzahl von zu bearbeitenden Teilbereichen 10 - 19 umfasst und durch das zugeordnete Bodenbearbeitungsgerät 1, 2 bearbeitet werden soll. Die in der Umgebungskarte 3 nicht eingeteilten Bereiche (siehe Umgebungskarte 3 gemäß Figur 4) sind beispielsweise solche, welche Hindernisse wie Möbelstücke oder Raumbegrenzungen 24 aufweisen. Ausgehend von der Figur 4a steht anfänglich eine Umgebungskarte 3 zur Verfügung, welche die Standorte 21, 22 zweier Bodenbearbeitungsgeräte 1, 2 sowie einen Grundriss 23 mit Raumbegrenzungen 24 enthält. Anschließend wird, wie in Figur 4b dargestellt, ein Gitter 20 mit gleichgroßen Gitterzellen 8, 9 über die Umgebungskarte 3 gelegt, die zur Bearbeitung den Bodenbearbeitungsgeräten 1, 2 zugeordnet werden sollen. Zunächst werden diejenigen Gitterzellen 8, 9, welche die Standorte 21, 22 der Bodenbearbeitungsgeräte 1, 2 beinhalten, für das jeweilige Bodenbearbeitungsgerät 1, 2 markiert, d. h., dass die Gitterzelle 8, 9 mit dem Standort 21 des ersten Bodenbearbeitungsgerätes 1 dem ersten Bodenbearbeitungsgerät 1 zur Bearbeitung zugeordnet wird und der Standort 22 des zweiten Bodenbearbeitungsgerätes 2 entsprechend dem zweiten Bodenbearbeitungsgerät 2. Mit anderen Worten werden wie in Figur 4b dargestellt zwei dem Standort 21 des Bodenbearbeitungsgerätes 1 nächstliegende Gitterzellen 8, 9 für das Bodenbearbeitungsgerät 1 eingeteilt, die Teilbereiche 10, 11 der Umgebungskarte 3 bilden. Dem Bodenbearbeitungsgerät 2 wird der Teilbereich 15, welcher den Standort 22 dieses Bodenbearbeitungsgerätes 2 aufweist, zur Bearbeitung zugeordnet. Für die weiteren Teilbereiche 12, 13, 14, 16, 17, 18, 19 der Umgebungskarte wird dann geprüft, welche Anfahrtszeit und welchen Anfahrtsweg jedes Bodenbearbeitungsgerät 1, 2 zu dem Teilbereich (12 - 14, 16 - 19) hätte und welche gerätespezifische Bearbeitungszeitspanne das jeweilige Bodenbearbeitungsgerät 1, 2 benötigen würde, um den Teilbereich (12 - 14, 16 - 19) zu reinigen. Schließlich wird auch geprüft, ob das Bodenbearbeitungsgerät 1, 2 für eine Bearbeitung dieses Teilbereiches (12 - 14, 16 - 19) geeignet ist. Dies ist insbesondere relevant, wenn die Teilbereiche 10 - 19 der Umgebungskarte 3 Bodenarten aufweisen, zu deren Bodenbearbeitung eines der Bodenbearbeitungsgeräte 1, 2 nicht geeignet ist. In dem Fall wird das jeweilige Bodenbearbeitungsgerät 1, 2 für eine Bearbeitung des betreffenden Teilbereiches 10 - 19 ausgeschlossen.

Des Weiteren wird für jedes Bodenbearbeitungsgerät 1, 2 eine Gesamtbearbeitungszeitspanne aufsummiert, welche die einzelnen Bearbeitungszeitspannen für die dem Bodenbearbeitungsgerät 1, 2 bereits zugeteilten Teilbereiche 10 - 19 beinhaltet. In der Figur 4 b ist das erste Bodenbearbeitungsgerät 1 beispielsweise bereits zur Bearbeitung der Teilbereiche 10 und 11 eingeteilt, was insgesamt eine Gesamtbearbeitungszeitspanne von beispielsweise zwei Minuten beansprucht, während das zweite Bodenbearbeitungsgerät 2 bisher nur zur Bearbeitung des Teilbereiches 15 eingeplant ist, welche Bearbeitung beispielsweise eine Bearbeitungszeitspanne von einer Minute beansprucht. In dem Verarbeitungsschritt gemäß Figur 4c wird anschließend ein nächster Teilbereich 16 zugeordnet, welcher dem Teilbereich 15 des zweiten Bodenbearbeitungsgerätes 2 benachbart ist. Wiederum werden eine Entfernung der Bodenbearbeitungsgeräte 1, 2 zu dem Teilbereich 16, eine gerätespezifische Bearbeitungszeitspanne und gerätespezifische Gesamtbearbeitungszeitspanne sowie Bodenart berücksichtigt bzw. berechnet, um dasjenige Bodenbearbeitungsgerät 1, 2 zu ermitteln, das zur Bearbeitung dieses Teilbereiches 16 eingeteilt werden soll. In dem Beispiel gemäß Figur 4c wird der Teilbereich 16 dem zweiten Bodenbearbeitungsgerät 2 zugeordnet, da dieses eine bisher niedrigste Gesamtbearbeitungszeitspanne aufweist und zudem an den Teilbereich 15 des zweiten Bodenbearbeitungsgerätes 2 angrenzt. Die Zuordnung der übrigen Teilbereiche 12 - 14, 17 - 19 wird so fortgesetzt, bis schließlich Teilbereichsgruppen 4, 5 ausgebildet sind, die alle Teilbereiche 10 - 19 der Umgebung umfassen (siehe Figur 4j). Die nicht zugeordneten Teilbereiche (blanke Gitterzellen 8, 9) sind durch keines der Bodenbearbeitungsgeräte 1, 2 befahrbar, beispielsweise weil dort Gegenstände die Bodenfläche bedecken. Die befahrbaren und zugeordneten Teilbereiche 10 - 19 sind im Ergebnis so zu Teilbereichsgruppen 4, 5 zusammengefasst, dass die Bodenbearbeitungsgeräte 1, 2 ihre Bodenbearbeitungen in den zugeordneten Teilbereichsgruppen 4, 5 im Wesentlichen zeitgleich beenden.

Eine weitere Ausführungsform der Erfindung zeigen die Figuren 5a und 5b. Gemäß dieser Ausführung werden in der erstellten Umgebungskarte 3 innerhalb des Grundrisses 23 Teilbereichsgruppen 4 - 7 identifiziert. Die Teilbereichsgruppen 4 - 7 sind durch Raumbegrenzungen 24 abgeteilt. Die Gesamtfläche der Umgebungskarte 3 wird hier somit in funktionale Teilbereiche, nämlich Räume einer Wohnung, zerlegt, beispielsweise eine Küche, ein Schlafzimmer, ein Flur, ein Wohnzimmer und ein Badezimmer. Anschließend werden gerätespezifische Gesamtbearbeitungszeitspannen zu den Teilbereichsgruppen 4 - 7 ermittelt, welche das jeweilige Bodenbearbeitungsgerät 1, 2 zur Bearbeitung der jeweiligen Teilbereichsgruppe 4 - 7 benötigen würde, wobei jede der Teilbereichsgruppen 4 - 7 zur vereinfachten Durchführung der Berechnungen wiederum in einzelne Teilbereiche 10 - 19 (nicht dargestellt) unterteilt sein könnte. Anschließend werden die Teilbereichsgruppen 4 - 7 den Bodenbearbeitungsgeräten 1, 2 so zugeordnet, dass die jeweiligen Gesamtbearbeitungszeiten der Bodenbearbeitungsgeräte 1, 2 näherungsweise gleichgroß sind. Wie in Figur 5b dargestellt, entstehen hier beispielsweise vier Teilbereichsgruppen 4 - 7. Das erkundende Bodenbearbeitungsgerät 1, 2 hat für die erste Teilbereichsgruppe 4 beispielsweise eine Zeitspanne von 37 Minuten benötigt, für die zweite Teilbereichsgruppe 5 eine Zeitspanne von 20 Minuten, für die dritte Teilbereichsgruppe 6 eine Zeitspanne von 5 Minuten und für die vierte Teilbereichsgruppe 7 eine Zeitspanne von 7 Minuten. Vorausgesetzt, dass die geschätzten Gesamtbearbeitungszeitspannen der die Bodenbearbeitung übernehmenden Bodenbearbeitungsgeräte 1, 2 genauso hoch sind wie die benötigten Zeitspannen des zuvor erkundenden Bodenbearbeitungsgerätes 1, 2, werden die Teilbereichsgruppen 4 - 7 hier den Bodenbearbeitungsgeräten 1, 2 so zugeteilt, dass das erste Bodenbearbeitungsgerät 1 zur Bearbeitung der Teilbereichsgruppen 4 und 6 eingesetzt wird, während die Teilbereichsgruppen 5 und 7 durch das zweite Bodenbearbeitungsgerät 2 bearbeitet werden sollen. Beide Bodenbearbeitungsgeräte 1, 2 benötigen für die Bearbeitung der ihnen zugewiesenen Teilbereichsgruppen 4 - 7 jeweils 42 Minuten und sind hier somit zeitgleich mit der Bodenbearbeitung fertig. Sofern die gerätespezifischen Bearbeitungsgeschwindigkeiten der Bodenbearbeitungsgeräte 1, 2 für die Bearbeitung der Teilbereichsgruppen 4 - 7 von der Geschwindigkeit des die Umgebung zunächst erkundenden Bodenbearbeitungsgerätes 1, 2 abweichen, ist die spezifische Zeitspanne des erkundenden Bodenbearbeitungsgerätes 1, 2 zunächst auf die charakteristischen Parameter des die Bodenbearbeitung übernehmenden Bodenbearbeitungsgerätes 1, 2 umzurechnen, um dann schließlich die Teilbereichsgruppen 4 - 7 so zuzuweisen, dass die Bodenbearbeitungen durch die Bodenbearbeitungsgeräte 1, 2 gleichzeitig oder im Wesentlichen abgeschlossen werden können.

### Liste der Bezugszeichen

- 1: Bodenbearbeitungsgerät
- 2: Bodenbearbeitungsgerät
- 3: Umgebungskarte
- 4: Teilbereichsgruppe
- 5: Teilbereichsgruppe
- 6: Teilbereichsgruppe
- 7: Teilbereichsgruppe
- 8: Gitterzelle
- 9: Gitterzelle
- 10: Teilbereich
- 11: Teilbereich
- 12: Teilbereich
- 13: Teilbereich
- 14: Teilbereich
- 15: Teilbereich
- 16: Teilbereich
- 17: Teilbereich
- 18: Teilbereich
- 19: Teilbereich
- 20: Gitter
- 21: Standort
- 22: Standort
- 23: Grundriss
- 24: Raumbegrenzung
- 25: Fortbewegungsroute

## Patentansprüche

1. Verfahren zum Betrieb eines Systems mit zumindest zwei sich selbsttätig fortbewegenden Bodenbearbeitungsgeräten (1, 2), wobei zumindest eines der Bodenbearbeitungsgeräte (1, 2) Umgebungsmerkmale einer Umgebung detektiert und anhand der detektierten Umgebungsmerkmale eine Umgebungskarte (3) erstellt, wobei die Umgebungskarte (3) in Teilbereiche (10 -19) aufgeteilt wird und die Teilbereiche (10 -19) den Bodenbearbeitungsgeräten (1, 2) so zugewiesen werden, dass jeder Teilbereich (10 - 19) nur durch eines der Bodenbearbeitungsgeräte (1, 2) bearbeitet wird, **dadurch gekennzeichnet, dass** eine während der Detektion der Umgebungsmerkmale verfolgte Fortbewegungsroute (25) des Bodenbearbeitungsgerätes (1, 2) sowie eine bei der Fortbewegung entlang der Fortbewegungsroute (25) verstrichene Fortbewegungszeitspanne detektiert und mit der Umgebungskarte (3) abgespeichert werden, wobei mehrere Teilbereiche (10 - 19) zu Teilbereichsgruppen (4 - 7) zusammengefasst werden, und wobei die Zuweisung der Teilbereiche (10 -19) zu den Bodenbearbeitungsgeräten (1, 2) unter Berücksichtigung der gespeicherten Fortbewegungsroute (25) und Fortbewegungszeitspanne so erfolgt, dass eine Bodenbearbeitung einer ersten Teilbereichsgruppe (4 - 7) durch ein erstes Bodenbearbeitungsgerät (1) im Wesentlichen gleichzeitig mit einer Bodenbearbeitung einer zweiten Teilbereichsgruppe (4 - 7) durch ein zweites Bodenbearbeitungsgerät (1) beendet wird, wobei die während der Detektion der Umgebungsmerkmale der Umgebung verstrichene Fortbewegungszeitspanne auf eine von einem bestimmten Bodenbearbeitungsgerät (1, 2) benötigte individuelle Zeitspanne zur Bearbeitung des jeweiligen Teilbereiches (10 - 19) umgerechnet wird, indem eine Fortbewegungsgeschwindigkeit des die Umgebungsmerkmale detektierenden Bodenbearbeitungsgerätes (1, 2) mit einer charakteristischen Fortbewegungsgeschwindigkeit eines einzuplanenden Bodenbearbeitungsgerätes (1, 2) verglichen wird, und wobei jedem Teilbereich (10 - 19) der Umgebung eine Information derart zugewiesen wird, ob das die Umgebungsmerkmale detektierende Bodenbearbeitungsgerät (1, 2) durch den Teilbereich (10 - 19) gefahren ist und wie lange sich das Bodenbearbeitungsgerät (1, 2) dabei in dem Teilbereich (10 - 19) aufgehalten hat.

2. Verfahren nach Anspruch 1, **dadurch gekennzeichnet, dass** für jeden Teilbereich (10 - 19) einzeln ermittelt wird, welche gerätespezifische Bearbeitungszeitspanne jedes der Bodenbearbeitungsgeräte (1, 2) zur Bearbeitung dieses Teilbereiches (10 - 19) benötigen würde, wobei dasjenige Bodenbearbeitungsgerät (1, 2) zur Bearbeitung dieses Teilbereiches (10 - 19) eingeplant wird, dessen ermittelte Bearbeitungszeitspanne am geringsten ist.

3. Verfahren nach Anspruch 1 oder 2, **dadurch gekennzeichnet, dass** zu jedem Teilbereich (10 - 19) eine Information über eine in dem Teilbereich (10 - 19) zu bearbeitende Bodenart gespeichert wird und für jedes Bodenbearbeitungsgerät (1, 2) einzeln ermittelt wird, welche bodenartspezifische Bearbeitungszeitspanne das jeweilige Bodenbearbeitungsgerät (1, 2) zur Bearbeitung dieses Teilbereiches (10 - 19) benötigen würde.

4. Verfahren nach Anspruch 2 oder 3, **dadurch gekennzeichnet, dass** die von einem Bodenbearbeitungsgerät (1, 2) zur Bearbeitung mehrerer Teilbereiche (10 - 19) benötigten Bearbeitungszeitspannen zu einer Gesamtbearbeitungszeitspanne aufaddiert werden, wobei dasjenige Bodenbearbeitungsgerät (1, 2) zur Bearbeitung eines weiteren Teilbereiches (10 - 19) eingeplant wird, dessen ohne Berücksichtigung der Bearbeitungszeitspanne des weiteren Teilbereiches (10 - 19) ermittelte Gesamtbearbeitungszeitspanne für bisher geplante Bodenbearbeitungstätigkeiten am geringsten ist.

5. Verfahren nach einem der vorhergehenden Ansprüche, **dadurch gekennzeichnet, dass** zu einem für eine Bodenbearbeitung durch eines der Bodenbearbeitungsgeräte (1, 2) bereits eingeplanten Teilbereich (10 - 19) oder zu einer für eine Bodenbearbeitung durch eines der Bodenbearbeitungsgeräte (1, 2) bereits eingeplanten Teilbereichsgruppe (4 - 7) ein solcher Teilbereich (10 - 19) hinzugefügt wird, welcher direkt an den geplanten Teilbereich (10 - 19) oder die geplante Teilbereichsgruppe (4 - 7) angrenzt.

6. Verfahren nach Anspruch 5, **dadurch gekennzeichnet, dass** zunächst ein solcher von mehreren angrenzenden, noch nicht eingeplanten Teilbereichen (10 - 19) hinzugefügt wird, welcher einen maximalen Abstand zu einem bereits für die Bearbeitung durch ein anderes Bodenbearbeitungsgerät (1, 2) geplanten Teilbereich (10 - 19) oder einer bereits für die Bearbeitung durch ein anderes Bodenbearbeitungsgerät (1, 2) geplanten Teilbereichsgruppe (4 - 7) aufweist.

7. Verfahren nach einem der vorhergehenden Ansprüche, **dadurch gekennzeichnet, dass** ein noch keinem Bodenbearbeitungsgerät (1, 2) zugewiesener und nicht an einen bereits für eine Bodenbearbeitung durch eines der Bodenbearbeitungsgeräte (1, 2) geplanten Teilbereich (10 - 19) oder eine geplante Teilbereichsgruppe (4 - 7) angrenzender Teilbereich (10 - 19) zur Bearbeitung einem Bodenbearbeitungsgerät (1, 2) zugewiesen wird, dessen aktueller Standort (21, 22) einen geringsten Abstand zu dem noch nicht zugewiesenen Teilbereich (10 - 19) aufweist.

8. Verfahren nach einem der vorhergehenden Ansprüche, **dadurch gekennzeichnet, dass** die Zusammenfassung der Teilbereiche (10 - 19) zu Teilbereichsgruppen (4 - 7) auf der Basis eines erstellten Grundrisses (23) der Umgebung erfolgt, so dass Raumbegrenzungen (24) des Grundrisses (23) Teilbereichsgruppen (4 - 7) begrenzen, wobei für jede Teilbereichsgruppe ermittelt wird, welche Bearbeitungszeitspanne das jeweilige Bodenbearbeitungsgerät (1, 2) zur Bearbeitung dieser Teilbereichsgruppe (4 - 7) benötigen würde, und wobei die Teilbereichsgruppen (4 - 7) den Bodenbearbeitungsgeräten (1, 2) für eine Bodenbearbeitung so zugeordnet werden, dass die Bodenbearbeitungen der Teilbereichsgruppen (4 - 7) im Wesentlichen gleichzeitig beendet werden.

9. Verfahren nach einem der vorhergehenden Ansprüche, **dadurch gekennzeichnet, dass** eine Bodenbearbeitungstätigkeit eines Bodenbearbeitungsgerätes (1, 2) in einem bestimmten Teilbereich (10 - 19) nur dann geplant wird, wenn das Bodenbearbeitungsgerät (1, 2) für eine Bodenbearbeitung dieses Teilbereiches (10 - 19) geeignet ist.

10. System mit mindestens zwei Bodenbearbeitungsgeräten (1, 2), **dadurch gekennzeichnet, dass** das System zur Durchführung eines Verfahrens gemäß einem der vorhergehenden Ansprüche ausgebildet ist.

## Claims

1. A method for operating a system with at least two automatically moving floor processing devices (1, 2), wherein at least one of the floor processing devices (1, 2) detects environmental features in an environment, and generates an area map (3) based on the detected environmental features, wherein the area map (3) is divided into partial areas (10 - 19), and the partial areas (10 - 19) are assigned to the floor processing devices (1, 2) in such a way that each partial area (10 - 19) is only processed by one of the floor processing devices (1, 2), **characterized in that** a movement route (25) of the floor processing device (1, 2) tracked during the detection of environmental features as well as a movement timespan that elapsed during the movement along the movement route (25) are detected and stored with the area map (3), wherein several partial areas (10 - 19) are combined into partial area groups (4 - 7), and wherein the partial areas (10 - 19) are allocated to the floor processing devices (1, 2) taking into consideration the stored movement route (25) and movement timespan in such a way that a floor processing of a first partial area group (4 - 7) by a first floor processing device (1) takes place at essentially the same time as a floor processing of a second partial area group (4 - 7) by a second floor processing device (1) is ended, wherein the travel time period elapsed during the detection of the environmental features of the environment is converted to an individual time period required by a certain floor processing device (1, 2) for processing the respective partial area (10 - 19) by comparing a travel speed of the floor processing device (1, 2) detecting the ambient features is compared with a characteristic travel speed of a floor processing device (1, 2) to be scheduled, and wherein information is assigned to each partial area (10 - 19) of the environment in such a way whether the floor processing device (1, 2) detecting the ambient features has travelled through the partial area (10 - 19) and how long the floor processing device (1, 2) has stayed in the partial area (10 - 19) in the process.

2. The method according to claim 1, **characterized in that** it is separately determined for each partial area (10 - 19) which device-specific processing timespan each of the floor processing devices (1, 2) would require to process this partial area (10 - 19), wherein the floor processing device (1, 2) with the smallest determined processing timespan is included in the plan for processing this partial area (10 - 19).

3. The method according to claim 1 or 2, **characterized in that** information about a floor type to be processed in the partial area (10 - 19) is stored for each partial area (10 - 19), and that it is determined for each floor processing device (1, 2) which floor type-specific processing timespan the respective floor processing device (1, 2) would need for processing this partial area (10 - 19).

4. The method according to claim 2 or 3, **characterized in that** the processing timespans required by a floor processing device (1, 2) to process several partial areas (10 - 19) are added together to yield an overall processing timespan, wherein the floor processing device (1, 2) whose overall processing timespan for previously planned floor processing activities is the lowest without considering the processing timespan for the other partial area (10 - 19) is included in the plan for processing another partial area (10 - 19).

5. The method according to one of the preceding claims, **characterized in that** a partial area (10 - 19) already included in the plan for floor processing by one of the floor processing devices (1, 2) or a partial area group (4 - 7) already included in the plan for floor processing by one of the floor processing devices (1, 2) has added to it a partial area (10 - 19) which is directly adjacent to the planned partial area (10 - 19) or the planned partial area group (4 - 7).

6. The method according to claim 5, **characterized in that** one out of several adjacent, not yet planned partial areas (10 - 19) is initially added which has a maximum distance to a partial area (10 - 19) already planned for processing by another floor processing device (1, 2) or a partial area group (4 - 7) already planned for processing by another floor processing device (1, 2).

7. The method according to one of the preceding claims, **characterized in that** a partial area (10 - 19) for processing that has not yet been assigned to a floor processing device (1, 2) and is not adjacent to a partial area (10 - 19) already planned for floor processing by one of the floor processing devices (1, 2) or to a planned partial area group (4 - 7) is allocated to a floor processing device (1, 2) whose current location (21, 22) has the smallest distance to the not yet assigned partial area (10 - 19).

8. The method according to one of the preceding claims, **characterized in that** the partial areas (10 - 19) are combined into partial area groups (4 - 7) based on a generated layout (23) of the environment, so that room boundaries (24) of the layout (23) border partial area groups (4 - 7), wherein it is determined for each partial area group which processing timespan the respective floor processing device (1, 2) would need to process this partial area group (4 - 7), and wherein the partial area groups (4 - 7) are allocated to the floor processing devices (1, 2) for floor processing in such a way that the floor processing operations for the partial area groups (4 - 7) are concluded at essentially the same time.

9. The method according to one of the preceding claims, **characterized in that** a floor processing activity of a floor processing device (1, 2) in a specific partial area (10 - 19) is only planned if the floor processing device (1, 2) is suitable for a floor processing of this partial area (10 - 19).

10. A system with at least two floor processing devices (1, 2), **characterized in that** the system is designed to implement a method according to one of the preceding claims.

## Revendications

1. Procédé de fonctionnement d'un système comprenant au moins deux appareils de traitement du sol (1, 2) se déplaçant automatiquement, dans lequel au moins un des appareils de traitement du sol (1, 2) détecte des caractéristiques d'environnement d'un environnement et établit une carte d'environnement (3) à l'aide des caractéristiques d'environnement détectées, dans lequel la carte d'environnement (3) est divisée en zones partielles (10 - 19) et les zones partielles (10 - 19) sont attribuées aux appareils de traitement du sol (1, 2) de manière que chaque zone partielle (10 - 19) ne soit traitée que par l'un des appareils de traitement du sol (1, 2), **caractérisé en ce que** qu'un itinéraire de déplacement (25) de l'appareil de traitement du sol (1, 2) suivi pendant la détection des caractéristiques d'environnement ainsi qu'un laps de temps de déplacement écoulé lors du déplacement le long de l'itinéraire de déplacement (25) sont détectés et mémorisés avec la carte d'environnement (3), dans lequel plusieurs zones partielles (10 - 19) sont regroupées en groupes de zones partielles (4 - 7) et dans lequel l'attribution des zones partielles (10 - 19) aux appareils de traitement du sol (1, 2) s'effectue en tenant compte de l'itinéraire de déplacement (25) et du laps de temps de déplacement mémorisés de telle manière qu'un traitement du sol d'un premier groupe de zones partielles (4 - 7) par un premier appareil de traitement du sol (1) soit terminé sensiblement en même temps qu'un traitement du sol d'un deuxième groupe de zones partielles (4 - 7) par un deuxième appareil de traitement du sol (1), dans lequel le laps de temps de déplacement écoulé pendant la détection des caractéristiques d'environnement de l'environnement est converti en un laps de temps individuel nécessaire à un appareil de traitement du sol déterminé (1, 2) pour le traitement de la zone partielle respective (10 - 19) en comparant une vitesse de déplacement de l'appareil de traitement du sol (1, 2) détectant les caractéristiques d'environnement à une vitesse de déplacement caractéristique d'un appareil de traitement du sol (1, 2) à planifier, et dans lequel une information est attribuée à chaque zone partielle (10 - 19) de l'environnement qui indique si l'appareil de traitement du sol (1, 2) détectant les caractéristiques d'environnement a traversé la zone partielle (10-19) et combien de temps l'appareil de traitement du sol (1, 2) est alors resté dans la zone partielle (10-19).

2. Procédé selon la revendication 1, **caractérisé en ce que** pour chaque zone partielle (10 - 19) est déterminé individuellement le laps de temps de traitement spécifique à l'appareil dont chacun des appareils de traitement du sol (1, 2) aurait besoin pour traiter cette zone partielle (10 - 19), dans lequel l'appareil de traitement du sol (1, 2) dont le laps de temps de traitement déterminé est le plus petit est planifié pour traiter cette zone partielle (10 - 19).

3. Procédé selon la revendication 1 ou 2, **caractérisé en ce que** pour chaque zone partielle (10 - 19) est mémorisée une information sur un type de sol à traiter dans la zone partielle (10 - 19) et pour chaque appareil de traitement du sol (1, 2) est déterminé individuellement quel laps de temps de traitement spécifique au type de sol serait nécessaire à l'appareil de traitement du sol (1, 2) respectif pour traiter cette zone partielle (10 - 19).

4. Procédé selon la revendication 2 ou 3, **caractérisé en ce que** les laps de temps de traitement nécessaires à un appareil de traitement du sol (1, 2) pour traiter plusieurs zones partielles (10-19) sont additionnés pour former un laps de temps de traitement total, dans lequel est planifié pour traiter une autre zone partielle (10-19) l'appareil de traitement du sol (1, 2) dont le laps de temps total déterminé sans tenir compte du laps de temps de traitement de l'autre zone partielle (10-19) est le plus petit pour les activités de traitement du sol planifiées jusqu'à là.

5. Procédé selon l'une des revendications précédentes, **caractérisé en ce qu'**à une zone partielle (10 - 19) déjà planifiée pour un traitement du sol par l'un des appareils de traitement du sol (1, 2) ou à un groupe de zones partielles (4 - 7) déjà planifié pour un traitement du sol par l'un des appareils de traitement du sol (1, 2) est ajouté une telle zone partielle (10 - 19) qui est directement adjacente à la zone partielle planifiée (10 - 19) ou au groupe de zones partielles planifié (4 - 7).

6. Procédé selon la revendication 5, **caractérisé en ce qu'**est ajouté d'abord une telle zone partielle (10 - 19) parmi plusieurs zones partielles adjacentes non encore planifiées, qui présente une distance maximale par rapport à une zone partielle (10 - 19) déjà planifiée pour le traitement par un autre appareil de traitement du sol (1, 2) ou à un groupe de zones partielles (4 - 7) déjà planifié pour le traitement par un autre appareil de traitement du sol (1, 2).

7. Procédé selon l'une des revendications précédentes, **caractérisé en ce qu'**une zone partielle (10 - 19) qui n'est pas encore attribuée à un appareil de traitement du sol (1, 2) et qui n'est pas adjacente à une zone partielle (10 - 19) ou à un groupe de zones partielles (4 - 7) déjà planifié pour un traitement du sol par l'un des appareils de traitement du sol (1, 2) est attribuée pour traitement à un appareil de traitement du sol (1, 2) dont l'emplacement actuel (21, 22) présente une distance la plus petite par rapport à la zone partielle (10 - 19) non encore attribuée.

8. Procédé selon l'une des revendications précédentes, **caractérisé en ce que** le regroupement des zones partielles (10 - 19) en groupes de zones partielles (4 - 7) s'effectue sur la base d'un plan (23) établi de l'environnement de manière que des délimitations d'espace (24) du plan (23) délimitent des groupes de zones partielles (4 - 7), dans lequel pour chaque groupe de zones partielles est déterminée quelle durée de travail l'appareil de traitement du sol (1, 2) respectif aurait besoin pour traiter ce groupe de zones partielles (4 - 7), et dans lequel les groupes de zones partielles (4 - 7) sont attribués aux appareils de traitement du sol (1, 2) pour un traitement du sol de telle manière que les traitements du sol des groupes de zones partielles (4 - 7) sont terminés sensiblement en même temps.

9. Procédé selon l'une des revendications précédentes, **caractérisé en ce qu'**une activité de traitement du sol d'un appareil de traitement du sol (1, 2) dans une zone partielle déterminée (10 - 19) n'est planifiée que si l'appareil de traitement du sol (1, 2) est adapté à un traitement du sol de cette zone partielle (10 - 19).

10. Système comprenant au moins deux appareils de traitement du sol (1, 2), **caractérisé en ce que** le système est conçu pour mettre en œuvre un procédé selon l'une des revendications précédentes.
